# EUROPÄISCHE PATENTANMELDUNG

(11) **EP 1 764 666 A1**
(43) Veröffentlichungstag der Anmeldung: **21.03.2007**
(21) Anmeldenummer: 06117458.7
(22) Anmeldetag: 19.07.2006
(51) Int. Cl.: G05B 19/418

(54) **System zur Erkennung eines lokalen Auslastungszustandes einer technischen Anlage**

(30) Priorität: 07.09.2005 DE 102005042532
(71) Anmelder: SIEMENS AKTIENGESELLSCHAFT, 80333 München (DE)
(72) Erfinder: Opgenoorth, Bernd, 90403, Nürnberg (DE); Scharnagl, Joachim, 90762, Fürth (DE)

(57) **Zusammenfassung**

Zusammenfassend betrifft die Erfindung ein System zur Erkennung eines lokalen Auslastungszustandes einer technischen Anlage zum Transport und/oder Verpackung von Objekten, wobei die Objekte eine Vorrichtung zur Kennzeichnung, insbesondere ein RFID Tag, aufweisen, die Vorrichtung zur Kennzeichnung einen Datenspeicher aufweist, und das System mindestens ein Schreib-Lesegerät zum kontaktlosen Auslesen mindestens eines Datenspeichers eines Objektes aufweist. Das System bewerkstelligt eine frühzeitige Meldung eines Auslastungszustandes der technischen Anlage, wie Stauung oder Mangel der Objekte, mit den Vorrichtungen zur Kennzeichnung, die auch zur Objektnachverfolgung verwendet werden können. Die Erkennung des lokalen Auslastungszustandes wird durch das wiederholte Auslesen des Datenspeichers mindestens eines Objektes umgesetzt.

## Beschreibung

Die Erfindung betrifft ein System zur Erkennung eines lokalen Auslastungszustandes einer technischen Anlage zum Transport und/oder Verpackung von Objekten, wobei die Objekte eine Vorrichtung zur Kennzeichnung, insbesondere ein RFID-Tag, aufweisen, die Vorrichtung zur Kennzeichnung einen Datenspeicher aufweist, das System mindestens ein Schreib-Lesegerät zum kontaktlosen Auslesen mindestens eines Datenspeichers eines Objektes aufweist. Die Erfindung betrifft weiterhin ein Schreib-Lesegerät gemäß dem Oberbegriff des Anspruchs 11, sowie ein Verfahren gemäß dem Oberbegriff des Anspruchs 17.

Ein derartiges System, Schreib-Lesegerät bzw. Verfahren kommt bei Automatisierungssystemen, Produkt- oder Fördersystemen oder Verpackungslinien oder ähnlichen technischen Anlagen zum Einsatz. Um eine reibungslose Produktion oder Verpackung mit komplexen Automatisierungs- und Produktionsanlagen zu gewährleisten, gibt es verschiedene Systeme zur Erkennung von Auslastungszuständen, wie z.B. einer Stauung oder einem Mangel von Produkten oder Objekten. Das Ziel dieser Systeme ist es, die Leerlaufzeit oder Ausfallszeit, die durch Stauungen oder Mängel der Produkte oder der zu transportierenden Objekte auftreten, zu vermeiden. Der technische Aufwand, sowie der Personalaufwand zur Erkennung und Behebung der durch die Auslastungszustände verursachten Störfälle ist im Allgemeinen sehr hoch, so dass sich die Auslastungszustände in der Regel produktionshemmend auswirken können. Im Allgemeinen sind verschiedene Arten von Sensoren zur Überwachung der Auslastungszustände verwendbar. Hierbei handelt es sich zum Beispiel um Sensoren, die auf optischer Basis oder auf Funkbasis arbeiten und universell einsetzbar sind. Sensoren die auf optischer Basis arbeiten, werden beispielsweise durch so genannte Barcodescanner realisiert. Auf Funk basierende Sensoren verwenden beispielsweise RFID-Techniken (Radiofrequenz Identifikation). Weit verbreitet sind auch optische Sensoren im Sinne von Lichtschranken, die meist kein Etikett im Sinne des RFID-Tags benötigen.

RFID ist eine sehr verlässliche Technik, die in der Lage ist, weitgehend statische oder sich bewegende Objekte nachzuverfolgen, wobei in der Vergangenheit die hohen Kosten und die ineffiziente Prozesskontrolle RFID unwirtschaftlich werden ließ. Heute sind die RFID-Tags bzw. die Schreib-Lesegeräte kostengünstig herstellbar. Durch RFID ist es möglich unter zuweilen schlechten Produktions- bzw. Verpackungsbedingungen ein Auslesen des elektronischen Etiketts zu gewährleisten. Weiterhin ist es nicht notwendig, dass eine optische Verbindung zum Objekt besteht. Es ist sehr leicht möglich, das Objekt gegebenenfalls abzuschirmen und dennoch eine Auslesung des RFID-Tags durchzuführen. Dies ist ein klarer Vorteil der RFID-Technik gegenüber optischen Auslesemethoden, weil auf diese Weise auch Prozesse mit den Objekten möglich sind, die keine Etikettierung im herkömmlichen Sinne erlauben, oder die Umgebungsbedingungen keine Etikettierung an der Außenhülle des transportierten Objektes zulässt.

Systeme zur Erkennung eines Auslastungszustandes bei technischen Anlagen verfügen meist über eine Visualisierung des vorhandenen Anlagenschaltbildes, das die gesamte Anlage im Überblick darstellt. Mit zunehmender Automatisierung und Komplexität derartiger Produktionslinien, Verpackungsanlagen oder im Allgemeinen technischen Anlagen nimmt auch die Anzahl der durch die Schreib-Lesegeräte erfassten RFID-Tags zu.

Oft wurden in der Vergangenheit die Maschinen einer technischen Anlage oder einer Linie nur über Lichtschranken aktiviert, das heißt wenn eine Lichtschranke ein Objekt vor der Maschine detektiert, so wurde die Maschine gestartet. Bei längeren Pausen zwischen den Produkten, zum Beispiel bei einem Mangel, ging die Maschine immer wieder in Stopp bzw. nimmt die Verarbeitung des ankommenden Objektes auf. Ähnliches gilt für die Situation nach der Maschine. Meldet dort die Lichtschranke in einem bestimmten Abstand nach der Maschine nicht innerhalb einer bestimmten Zeit den Abtransport des bearbeiteten Objektes, so stoppt die Maschine, um einen Stau zu verhindern. An ein überlagertes Betriebsdatenerfassungssystem wird aber nur die Eigenstörung der Maschine gemeldet, nicht aber der Stau bzw. Mangel, der wahrscheinlich dazu geführt hat. Schlimmer ist jedoch, dass es so zu einem ungewollten Stop-and-Go-Betrieb kommt, da der Stau bzw. Mangel nicht rechtzeitig erkannt wurde und dann nicht entsprechend reagiert werden konnte. Ein Stop-and-Go-Verhalten ist im Hinblick auf eine reibungslose Produktion unbedingt zu vermeiden. Derzeit ist es noch sehr schwer mit einfachen und kostengünstigen Mitteln zuverlässig und frühzeitig eine Stauung bzw. ein Mangel zu erkennen.

Aus US 2005 0080680 A1 ist ein RFID-Prozesskontrollsystem bekannt, welches verschiedene Komponenten in einer einzigen Einheit kombiniert zur Verwendung in Nachverfolgungssystemen, die mit RFID-Tags ausgestatteten Inventargegenständen funktionieren. Das System kombiniert einen RFID-Controller und Lesereinheit, Prozesssoftware, einen Computer gesteuerten Schalter, und ein Versorgungsmanagementsystem in eine einzige Einheit, wodurch eine RFID-Prozesskontrolle in Verbindung mit einem breiten Spektrum von Inventarnachverfolgungsanwendungen realisierbar ist.

Der Erfindung liegt die Aufgabe zugrunde, eine technische Anlage, bzw. die in der technischen Anlage transportierten Objekte zu überwachen und Auslastungszustände frühzeitig zu identifizieren.

Diese Aufgabe wird bei einem System der eingangs genannten Art dadurch gelöst, dass das System durch wiederholtes Auslesen des Datenspeichers mindestens eines Objektes ein lokaler Auslastungszustand der technischen Anlage analysierbar ist. Diese Aufgabe wird weiterhin gelöst durch ein Schreib-Lesegerät und ein Verfahren zur Erkennung eines lokalen Auslastungszustandes mit den in den Ansprüchen 11 und 17 genannten Merkmalen.

An definierten Stellen entlang des Transportweges der Objekte innerhalb der technischen Anlage sind Schreib-Lesegeräte angebracht, um so optimal die vorhandenen Vorrichtungen zur Kennzeichnung, insbesondere RFID-Tags, der Objekte zur Stauerkennung oder Mangelerkennung zu nutzen. Dazu führt ein Schreib-Lesegerät zyklisch ein so genanntes "Bulklesen" durch. Unter Bulklesen versteht man das Auslesen mehrerer Vorrichtungen zur Kennzeichnung mit einem Lesevorgang. Liegt die Zahl der erfassten Vorrichtungen zur Kennzeichnung oberhalb einer bestimmten Grenze, so wird eine Staumeldung abgesetzt. Liegt die Zahl hingegen unterhalb einer bestimmten Grenze, so wird eine Mangelmeldung abgesetzt. Zusätzlich oder alternativ kann bei jedem Lesevorgang geprüft werden, ob die Identitäten, bzw. die Kennung der ausgelesenen Vorrichtungen zur Kennzeichnung dieselben sind, wie beim vorherigen Lesevorgang, bzw. eine hohe Überdeckung vorhanden ist. Ist dies der Fall, bedeutet das, dass die Produkte auf dem Band stehen und somit eine Stauung aufgetreten sein muss oder sich anbahnt, da die Änderungsrate zu gering ist. Auch in diesem Fall kann eine Staumeldung bzw. Stauwarnung abgesetzt werden. Ein Mangel bzw. ein sich ankündigender Mangel wird entsprechend über eine geringe Anzahl von Objekten über einen bestimmten Zeitraum erkannt und ebenfalls als Mangelmeldung oder Mangelwarnung gemeldet.

Weiterhin können zwei Schreib-Lesegeräte eingesetzt werden, um mit verschiedenen zeitlich versetzten Lesevorgängen das gleiche Objekt zu unterschiedlichen Zeitpunkten an verschiedenen Stellen innerhalb der technischen Anlage identifizieren und auf die benötigte Zeit des zwischen den beiden Schreib-Lesegeräten zurückgelegten Weges zurückzuschließen. In diesem Zusammenhang ist es sinnvoll eine Datenverarbeitungseinheit zu verwenden, die die Zustandsdaten beider Schreib-Lesegeräte verarbeitet und eine ausführliche Analyse der technischen Anlage ermöglicht. Durch die detaillierte Information bzw. die durch die Datenverarbeitungseinheit generierten Diagnosedaten ist es möglich, über den gegebenen Verkehr auf dem Transportband eine gezielte Optimierung zur Analyse und zur Auflösung unerwünschter Auslastungszustände durchzuführen.

In ein Betriebsdatenerfassungssystem können neben den Zuständen Eigenstörung und Produktion (Maschine bzw. Linie produziert fehlerfrei) nun auch Auslastungszustände, wie z.B. Stauwarnung, Mangelwarnung eingetragen werden. Dadurch wird eine bessere Effizienzbetrachtung der Produktions-, Fertigungs- oder Verpackungsmaschinenlinie mit einfachen Mitteln unter Ausnutzung der für andere Zwecke (Produktrückverfolgbarkeit, bzw. Logistikunterstützung) genutzten Vorrichtungen zur Kennzeichnung (RFID-Tags) möglich. Damit ist die Basis für entsprechende automatische Optimierungen zur Stauvermeidung bzw. Auflösung und zur Effizienzsteigerung einer Produktions-, Fertigungs- oder Verpackungsmaschinen nunmehr gegeben.

Eine vorteilhafte Ausführungsform des Systems zur Erkennung eines lokalen Auslastungszustandes einer technischen Anlage zum Transport und/oder Verpackung von Objekten ist ein System, welches ein erstes Schreib-Lesegerät zum erstmaligen Auslesen des Datenspeichers mindestens eines Objektes und mindestens ein zweites Schreib-Lesegerät zum nochmaligen Auslesen des Datenspeichers aufweist. Hierdurch wird die Nachverfolgung eines Objektes innerhalb der technischen Anlage bzw. entlang des Transportweges des Objektes gewährleistet, wobei zusätzlich Aussagen über die Transportdauer zwischen den Schreib-Lesegeräten gemacht werden können.

Bei einer weiteren vorteilhaften Ausführungsform sind das erste Schreib-Lesegerät und das zweite Schreib-Lesegerät zum Auslesen des Datenspeichers des Objektes an verschiedenen Stellen des Transportweges der Objekte vorgesehen. Anhand der Transportdauer zwischen dem ersten Schreib-Lesegerät und des zweiten Schreib-Lesegerätes ist es möglich, eine Stauung oder einen Mangel zu detektieren.

Bei einer weiteren vorteilhaften Ausführungsform ist ein erster lokaler Auslastungszustand eine lokale Stauung und ein zweiter lokaler Auslastungszustand ein lokaler Mangel beim Transport der Objekte, wobei weitere Auslastungszustände in Abhängigkeit der technischen oder den Umständen entsprechenden Bedingungen definiert werden können.

Weiterhin ist es von Vorteil, wenn das Schreib-Lesegerät zum gleichzeitigen Auslesen von Datenspeichern von Objekten, die sich im Erfassungsbereich des jeweiligen Schreib-Lesegerätes befinden, vorgesehen ist, um festzustellen, wie viele und welche Objekte sich im Erfassungsbereich befinden. Dadurch kann lokal an einem Schreib-Lesegerät durch das wiederholte Auslesen der Datenspeicher der Objekte festgestellt werden, ob eine Stauung oder ein Mangel vorliegt. Eine wiederholte Erkennung der gleichen Objekte bedeutet in diesem Fall eine Stauung. Eine zu geringe Anzahl von erkannten Objekten bedeutet einen Mangel.

Vorteilhafterweise wird eine Datenverarbeitungseinheit verwendet, um die Zustandsdaten des Schreib-Lesegerätes darzustellen und/oder zu bearbeiten. Die Darstellung der Zustandsdaten des Schreib-Lesegerätes oder der Schreib-Lesegeräte kann sinnvollerweise zur manuellen Behebung des Auslastungszustandes verwendet werden. Weiterhin ist durch die Bearbeitung der Datenverarbeitungseinheit eine Möglichkeit geschaffen, die Zustandsdaten zur automatischen Behebung weiter zu verwenden.

Von Vorteil ist auch die Generierung von Diagnosedaten durch die Datenverarbeitungseinheit zur Steuerung der technischen Anlage wodurch ein Feedback von dem System zur Erkennung eines lokalen Auslastungszustandes als Diagnosesystem und den Steuerungseinheiten zu realisieren. Dadurch ist es möglich, die Produktions- bzw. Verpackungslinie oder technische Anlage in Abhängigkeit des Auslastungszustandes optimal zu steuern und den Auslastungszustand zu optimieren.

Bei einer weiteren vorteilhaften Ausführungsform sieht das System eine Erkennung eines Auslastungszustandes der gesamten technischen Anlage oder Teilbereichen der technischen Anlage vor. Auf diese Weise ist es möglich, mehreren Problemzonen auf dem Transportweg gleichzeitig mit einem Gesamtkonzept zu begegnen. Im Besonderen ist es möglich ein so genanntes Stop-and-Go-Verhalten, welches für den optimalen Betrieb sehr hinderlich ist, zu vermeiden.

Bei einer weiteren vorteilhaften Ausführungsform sieht das Schreib-Lesegerät zum Speichern von Zustandsdaten und/oder Diagnosedaten der Datenverarbeitungseinheit auf dem Datenspeicher mindestens eines Objektes vor. Dieser Umstand erweist sich als Vorteil, wenn die Objekteigenschaften von der Dauer, die das Objekt benötigt hat, durch die technische Anlage oder Teilbereiche derselben transportiert zu werden, relevant sind. Beispielsweise könnte bei einer Lackieranlage ein Objekt innerhalb der technischen Anlage lackiert werden und soll auf dem weiteren Transportweg trocknen. Bevor der nächste Schritt innerhalb des Prozesses ausgeführt werden darf, muss das Objekt getrocknet sein. Ist der Lack immer noch feucht, so würde die Qualität des Objektes Schaden nehmen. Durch die Erkennung des Objektes an zwei verschiedenen Stellen innerhalb des Transportweges durch zwei verschiedene Schreibleseeinheiten ist es möglich, auf die Dauer der Trockenperiode zurück zu schließen. Hiermit kann entschieden werden, ob das Objekt bereits für den nächsten Bearbeitungsschritt geeignet ist.

Diese Art der Bearbeitungszeitüberwachung ist auch in anderen Anwendungsgebieten einsetzbar. Beispielsweise ist im Pharma- oder Lebensmittelbereich eine Überwachung oder Erkennung einer Zeitüberschreitung wichtig, da gewisse Produkte nur eine bestimmte Zeit in einem bestimmten Verarbeitungszustand verbleiben dürfen.

Vorteilhafterweise könnte das System ein Schreib-Lesegerät beinhalten, welches als Kontrolleinheit ausgebildet ist, wobei die Kontrolleinheit neben dem Schreib-Lesegerät auch eine Datenverarbeitungseinheit aufweist, um ein mobiles System zu realisieren. Dieses mobile System ist flexibel innerhalb einer beliebigen technischen Anlage einsetzbar und kann im Besonderen auf ein ganz bestimmtes Problem hin angesetzt werden, das heißt, es kann eine ganz bestimmte Stelle innerhalb des Transportweges ausgewählt werden, wo dieses System zum Einsatz kommt.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispiele näher beschrieben und erläutert. Es zeigen:
- FIG 1: eine Prinzipdarstellung eines ersten Ausführungsbeispiels eines Systems zur Erkennung eines lokalen Auslastungszustandes einer technischen Anlage,
- FIG 2: eine Prinzipdarstellung eines zweiten Ausführungsbeispiels eines Systems zur Erkennung eines lokalen Auslastungszustandes einer technischen Anlage, und
- FIG 3: eine weitere Prinzipdarstellung des zweiten Ausführungsbeispiels.

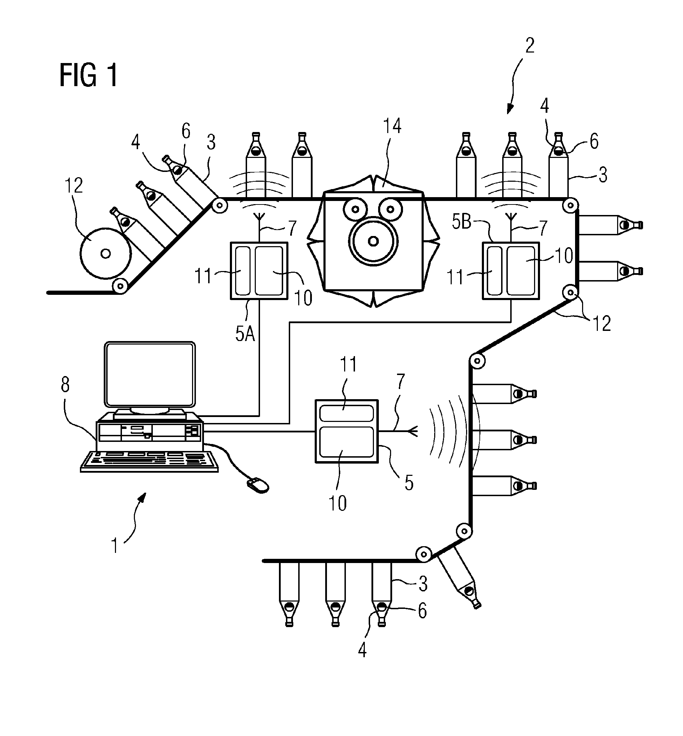

FIG 1 zeigt eine Prinzipdarstellung eines ersten Ausführungsbeispiels eines Systems 1 zur Erkennung eines lokalen Auslastungszustandes einer technischen Anlage 2. Im ersten Ausführungsbeispiel besteht die technische Anlage 2 im Wesentlichen aus einer Förderanlage, die Objekte 3 transportiert. Darüber hinaus weist die technische Anlage 2 auch Förderelemente 12 auf, wie zum Beispiel Maschinen, Laufräder, Förderbänder oder ähnliches. Die Objekte weisen eine Vorrichtung 4 zur Kennzeichnung der Objekte auf, und weisen weiterhin einen Datenspeicher 6 auf. Die Objekte 3 weisen in beiden Ausführungsbeispielen nur beispielhaft die Form einer Flasche auf, die Objekte können ganz allgemein Produkte oder aller möglichen Arten von technischen oder nichttechnischen Gegenständen verkörpern. Die technische Anlage 2 hat die Aufgabe, die Objekte 3 zumindest zu transportieren und/oder an diesen in irgendeiner Weise automatisch bestimmte Arbeitsschritte vorzunehmen. Das System 1 zur Erkennung eines lokalen Auslastungszustandes besteht im ersten Ausführungsbeispiel aus einer Datenverarbeitungseinheit 8, sowie aus drei Schreib-Lesegeräten 5, 5a, 5b, die an definierten Plätzen entlang des Transportweges der Objekte 3 platziert sind. Die Schreib-Lesegeräte 5, 5a, 5b beinhalten eine Leseeinheit 11, eine Schreibeinheit 10 und eine Antenne 7. Für die folgende Beschreibung wird von einer Förderrichtung im Uhrzeigersinn ausgegangen. Ein Objekt 3 wird demzufolge zuerst den Erfassungsbereich des Schreib-Lesegerätes 5a, danach den Erfassungsbereich des Schreib-Lesegerätes 5b und zuletzt den Erfassungsbereich des Schreib-Lesegerätes 5 passieren. Durch das Auslesen des Datenspeichers 6 eines Objektes 3 durch das Schreib-Lesegerät 5a wird gleichzeitig ein Zeitpunkt festgehalten, zudem das Objekt 3 den Erfassungsbereich das Schreib-Lesegerät 5a passiert. Danach passiert das Objekt 3 die Maschine 14, in der es eine Behandlung im technischen Sinne erfährt. Es ist möglicherweise wichtig zu wissen, wie lange das Objekt 3 von der Maschine 14 behandelt worden ist. Folglich ist auch der Zeitpunkt wichtig, wann das Objekt 3 den Erfassungsbereich des Schreib-Lesegerätes 5b passiert, denn dadurch wird der Zeitpunkt festgehalten, wann das Objekt 3 den Einflussbereich der Maschine 14 verlassen hat. Somit ist die Dauer der Bearbeitung des Objektes 3 durch die Maschine 14 errechenbar. Hierdurch kann auf die Qualität der Bearbeitung oder des Objektes 3 selbst zurückgeschlossen werden. Weiterhin ist es möglich, eine Stauung in der Maschine 14 zu erkennen. Eine Stauung liegt vor, wenn die Zeit, die seit dem erstmaligen Detektieren des Objektes 3 durch das Schreib-Lesegerät 5a einen voreinstellbaren Maximalwert überschreitet. Die Erkennungsanalyse kann in der Datenverarbeitungseinheit 8 realisiert werden, sowie die Darstellung dieser Stauung auf beispielsweise einem Bildschirm. Ein ähnliches Verfahren kann angewendet werden, um Mängel im Sinne von geringen Objektaufkommen auf einem lokalen Abschnitt des Transportweges zu erkennen.

Eine Durchlaufszeitverfolgung ist insbesondere dann sinnvoll, wenn eine Störung innerhalb einer Maschine 14 oder eines Transportabschnittes nicht direkt erkennbar oder analysierbar ist. Beispielsweise ist das der Fall, wenn eine Maschine 14 nicht zur Meldung eines Auslastungszustandes, einer Störung oder eines Fehlers ausgelegt ist. Es kommt häufig vor, dass eine Maschine 14 nicht diagnosefähig ist, oder nicht zur Messwertaufnahme vorgesehen ist, um einen Auslastungszustand festzustellen. Die Maschine 14 könnte auch nicht vernetzt und somit nicht meldefähig sein. Besteht hingegen eine Durchlaufzeitverfolgung auf dem Transportweg, an dem die Maschine 14 eingesetzt wird, so werden die Förderelemente 12 und/oder die Maschine 14 durch die Durchlaufzeitverfolgung überwacht.

Es ist weiterhin möglich, mehrere lokale Auslastungszustände innerhalb der technischen Anlage 2 entlang des Transportweges gleichzeitig zu analysieren und zu eliminieren.

Durch eine adequate Platzierung der Schreib-Lesegeräte ist es ebenfalls möglich, wichtige Informationen zum Auslastungszustand frühzeitig zu identifizieren und zur umgehenden manuellen oder automatischen Behebung des Auslastungszustandes zu verwenden. Weiterhin wird der gewünschte Auslastungszustand ohne prozesshinderliche Objektdichten durch stetiges Optimieren bei hoher Objekttransportgeschwindigkeit angestrebt.

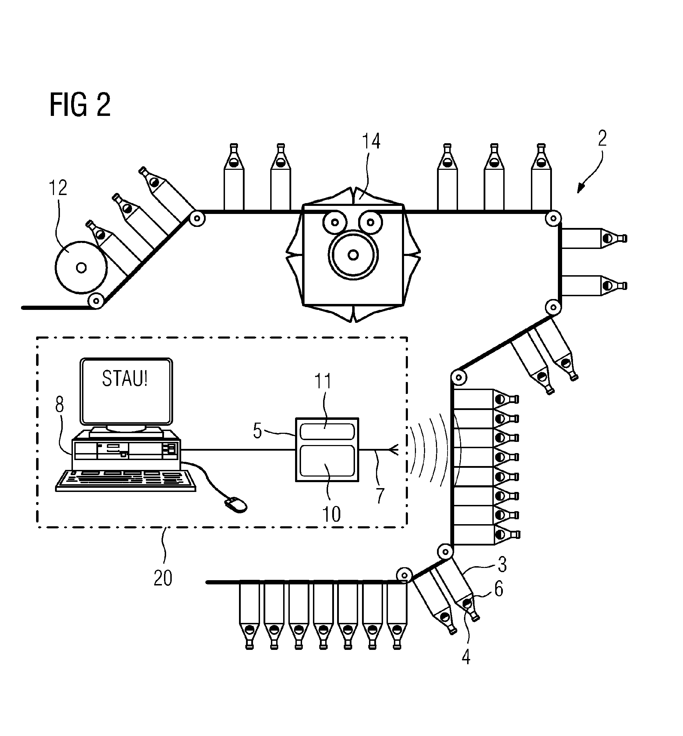

FIG 2 zeigt eine Prinzipdarstellung eines weiteren Ausführungsbeispiels eines Systems 1 zur Erkennung eines lokalen Auslastungszustandes einer technischen Anlage 2. In diesem Ausführungsbeispiel besteht das System 1 aus einer Kontrolleinheit 20 zur Erkennung eines Auslastungszustandes einer technischen Anlage 2, welches ein Schreib-Lesegerät 5 und eine Datenverarbeitungseinheit 8 aufweist. Das dargestellte Schreib-Lesegerät 5 ist dafür vorgesehen, lokal eine Auslastungszustandsanalyse durchzuführen. In diesem Fall liegt der Auslastungszustand eines Staus der Objekte 3 vor. Es befinden sich auf der Produktionslinie im Erfassungsbereich der Schreib-Leseeinheit 5 mehrere Objekte, die durch Bulklesen identifizierbar sind. Hierbei kann bereits die Anzahl der im Erfassungsbereich befindlichen Objekte 3 ermittelt werden. Liegt diese gelesene Anzahl unterhalb des für einen Stau voreingestellten Schwellwertes, so wird davon ausgegangen, dass keine Stauung vorliegt. Wird dieser Schwellwert überschritten, liegt eine Stauung vor, die detektiert und gemeldet wird. Die Meldung kann im Ausführungsbeispiel an die Datenverarbeitungseinheit 8 erfolgen oder auf akustische und/oder optische Weise, in Form einer Warnleuchte und/oder eines Warnsignals. Gesetzt den Fall, dass dieser Schwellenwert in unserem Ausführungsbeispiel bei drei Stückobjekten 3 liegt, so wird, da sich im Erfassungsbereich mehr als sechs Flaschen befinden, eine Staumeldung abgesetzt. Unter Ausnutzung der eindeutigen Daten des Datenspeichers 6 der Objekte 3 kann zusätzlich geprüft werden, ob sich die im Erfassungsbereich befindlichen Objekte 3 laufend ändern. Ist dies nicht der Fall, heißt das, dass die Datenspeicherinformationen, insbesondere die Identifikation der Objekte 3, über einen gewissen Zeitraum hinweg konstant geblieben sind und so eine große Überdeckung der zuvor gelesenen Informationen ergeben. Folglich ist ein Stillstand bzw. Stau bei der Anwendung dieses Verfahrens detektierbar. Das Entsprechende gilt für den Objektmangel. In jedem Fall kann eine entsprechende Meldung abgegeben werden.

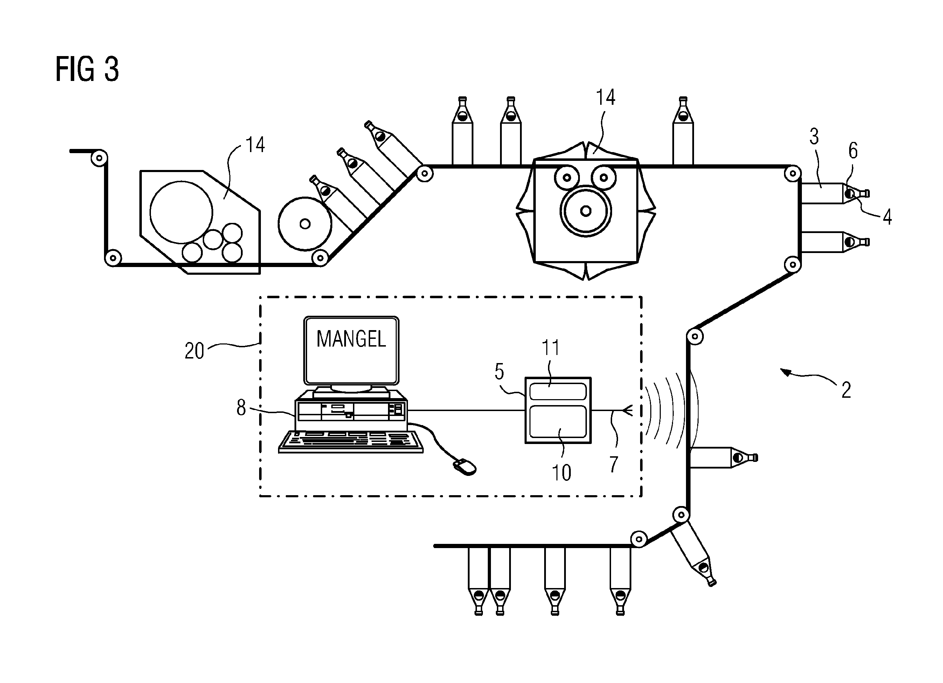

FIG 3 zeigt eine weitere Prinzipdarstellung des zweiten Ausführungsbeispiels aus FIG 2, wobei allerdings der lokale Auslastungszustand des Mangels vorliegt. Wurden über einen längeren Zeitraum, der durch den Anwender festlegbar ist, zu wenige Datenspeicher 6 ausgelesen, so liegt ein Mangel vor, bzw. es bahnt sich ein Mangel an. Die Betrachtung aus der Beschreibung zu FIG 2 ist bei FIG 3 entsprechend anzuwenden. Auf Basis der detaillierten Informationen, die zu anderen Zwecken, z.B. der Produktrückverfolgbarkeit oder Logistikunterstützung vorhandenen Datenspeicher 6 bezogen werden können, ist eine genaue Effizienzanalyse und eine entsprechende Effizienzoptimierung der Linie bzw. der technischen Anlage möglich.

Zusammenfassend betrifft die Erfindung ein System zur Erkennung eines lokalen Auslastungszustandes einer technischen Anlage zum Transport und/oder Verpackung von Objekten, wobei die Objekte eine Vorrichtung zur Kennzeichnung, insbesondere ein RFID Tag, aufweisen, die Vorrichtung zur Kennzeichnung einen Datenspeicher aufweist, und das System mindestens ein Schreib-Lesegerät zum kontaktlosen Auslesen mindestens eines Datenspeichers eines Objektes aufweist. Das System bewerkstelligt eine frühzeitige Meldung eines Auslastungszustandes der technischen Anlage, wie Stauung oder Mangel der Objekte, mit den Vorrichtungen zur Kennzeichnung, die auch zur Objektnachverfolgung verwendet werden können. Die Erkennung des lokalen Auslastungszustandes wird durch das wiederholte Auslesen des Datenspeichers mindestens eines Objektes umgesetzt.

## Patentansprüche

1. System (1) zur Erkennung eines lokalen Auslastungszustandes einer technischen Anlage (2) zum Transport und/oder Verpackung von Objekten (3), wobei
- die Objekte (3) eine Vorrichtung (4) zur Kennzeichnung, insbesondere ein RFID Tag, aufweisen,
- die Vorrichtung (4) zur Kennzeichnung einen Datenspeicher (6) aufweist,
- das System (1) mindestens ein Schreib-Lesegerät (5,5A,5B) zum kontaktlosen Auslesen mindestens eines Datenspeichers (6) eines Objektes (3) aufweist,
**dadurch gekennzeichnet, dass** durch das wiederholte Auslesen des Datenspeichers (6) mindestens eines Objektes (3) ein lokaler Auslastungszustand der technischen Anlage (2) analysierbar ist.

2. System (1) nach Anspruch 1, wobei das System (1) ein erstes Schreib-Lesegerät (5A) zum erstmaligen Auslesen des Datenspeichers (6) mindestens eines Objektes (3) und mindestens ein zweites Schreib-Lesegerät (5B) zum nochmaligen Auslesen des Datenspeichers (6) aufweist.

3. System (1) nach einem der Ansprüche 1 oder 2, wobei das erste Schreib-Lesegerät (5A) und das zweite Schreib-Lesegerät (5B) zum Auslesen des Datenspeichers (6) des Objektes (3) an verschiedenen Stellen des Transportweges der Objekte (3) vorgesehen sind.

4. System (1) nach einem der vorhergehenden Ansprüche, wobei ein erster lokaler Auslastungszustand eine lokale Stauung und ein zweiter lokaler Auslastungszustand ein lokaler Mangel beim Transport der Objekte (3) sind.

5. System (1) nach einem der vorhergehenden Ansprüche, wobei das Schreib-Lesegerät (5,5A,5B) zum gleichzeitigen Auslesen von Datenspeichern (6) von Objekten (3), die sich im Erfassungsbereich des jeweiligen Schreib-Lesegerätes (5,5A,5B) befinden, vorgesehen ist.

6. System (1) nach einem der vorhergehenden Ansprüche, wobei das System (1) eine Datenverarbeitungseinheit (8) aufweist, die zur Darstellung und/oder Bearbeitung von Zustandsdaten des Schreib-Lesegerätes (5,5A,5B) vorgesehen ist.

7. System (1) nach einem der vorhergehenden Ansprüche, wobei die Datenverarbeitungseinheit (8) zur Generierung von Diagnosedaten zur Steuerung der technischen Anlage (2) vorgesehen ist.

8. System (1) nach einem der vorhergehenden Ansprüche, wobei das System (1) zur Erkennung eines Auslastungszustandes der gesamten technischen Anlage (2) oder Teilbereichen der technischen Anlage (2) vorgesehen ist.

9. System (1) nach einem der vorhergehenden Ansprüche, wobei das Schreib-Lesegerät (5,5A,5B) zum Speichern von Zustandsdaten und/oder Diagnosedaten der Datenverarbeitungseinheit (8) auf dem Datenspeicher (8) mindestens eines Objektes (3) vorgesehen ist.

10. System (1) nach einem der vorhergehenden Ansprüche, wobei das Schreib-Lesegerät (5,5A,5B) als Kontrolleinheit (20) ausgebildet ist.

11. Kontrolleinheit (20) zur Erkennung eines lokalen Auslastungszustandes einer technischen Anlage (2) zum Transport und/oder Verpackung von Objekten (3), wobei
- die Objekte (3) eine Vorrichtung (4) zur Kennzeichnung, insbesondere ein RFID Tag, aufweisen,
- die Vorrichtung (4) zur Kennzeichnung einen Datenspeicher (6) aufweist,
- die Kontrolleinheit (20) mindestens ein Schreib-Lesegerät (5,5A,5B) zum kontaktlosen Auslesen mindestens eines Datenspeichers (6) eines Objektes (3) aufweist,
**dadurch gekennzeichnet, dass** durch das wiederholte Auslesen des Datenspeichers (6) mindestens eines Objektes (3) ein lokaler Auslastungszustand der technischen Anlage (2) analysierbar ist.

12. Schreib-Lesegerät (20) nach Anspruch 11, wobei ein erster lokaler Auslastungszustand eine lokale Stauung und ein zweiter lokaler Auslastungszustand ein lokaler Mangel beim Transport der Objekte (3) sind.

13. Schreib-Lesegerät (20) nach einem der Ansprüche 10 oder 12, wobei das Schreib-Lesegerät (5,5A,5B) zum gleichzeitigen Auslesen von Datenspeichern (6) von Objekten (3), die sich im Erfassungsbereich des jeweiligen Schreib-Lesegerätes (5, 5A, 5B) befinden, vorgesehen ist.

14. Schreib-Lesegerät (20) nach einem der Ansprüche 11 bis 13, wobei das Schreib-Lesegerät (20) eine Datenverarbeitungseinheit (8) aufweist, die zur Darstellung und/oder Bearbeitung von Zustandsdaten des Schreib-Lesegerätes (5,5A,5B) vorgesehen ist.

15. Schreib-Lesegerät (20) nach einem der Ansprüche 11 bis 14, wobei die Datenverarbeitungseinheit (8) zur Generierung von Diagnosedaten zur Steuerung der technischen Anlage (2) vorgesehen ist.

16. Schreib-Lesegerät (20) nach einem der Ansprüche 11 bis 15, wobei das Schreib-Lesegerät (5,5A,5B) zum Speichern von Zustandsdaten und/oder Diagnosedaten der Datenverarbeitungseinheit (8) auf dem Datenspeicher (8) mindestens eines Objektes (3) vorgesehen ist.

17. Verfahren zur Erkennung eines lokalen Auslastungszustandes einer technischen Anlage (2) zum Transport und/oder Verpackung von Objekten (3), wobei
- die Objekte (3) eine Vorrichtung (4) zur Kennzeichnung, insbesondere ein RFID Tag, aufweisen,
- die Vorrichtung (4) zur Kennzeichnung einen Datenspeicher (6) aufweist,
- mindestens ein Schreib-Lesegerät (5,5A,5B) mindestens einen Datenspeicher (6) eines Objektes (3) kontaktlos ausliest,
**dadurch gekennzeichnet, dass** der Datenspeicher (6) mindestens eines Objektes (3) zur Analyse eines lokalen Auslastungszustandes der technischen Anlage (2) wiederholt ausgelesen wird.

18. Verfahren nach Anspruch 17, wobei ein erstes Schreib-Lesegerät (5A) erstmalig den Datenspeicher (6) mindestens eines Objektes (3) und mindestens ein zweites Schreib-Lesegerät (5B) nochmals den Datenspeicher (6) mindestens eines Objektes (3) ausliest.

19. Verfahren nach einem der Ansprüche 17 oder 18, wobei das erste Schreib-Lesegerät (5A) und das zweite Schreib-Lesegerät (5B) den Datenspeicher (6) des Objektes (3) an verschiedenen Stellen des Transportweges auslesen.

20. Verfahren nach einem der Ansprüche 17 bis 19, wobei ein erster lokaler Auslastungszustand eine lokale Stauung und ein zweiter lokaler Auslastungszustand ein lokaler Mangel beim Transport der Objekte (3) sind.

21. Verfahren nach einem der Ansprüche 17 bis 20, wobei das Schreib-Lesegerät (5,5A,5B) Datenspeicher (6) von Objekten (3), die sich im Erfassungsbereich der jeweiligen Kontrolleinheit (5,5A,5B) befinden, gleichzeitig ausliest.

22. Verfahren nach einem der Ansprüche 17 bis 21, wobei eine Datenverarbeitungseinheit (8) die Zustandsdaten des Schreib-Lesegerätes (5,5A,5B) darstellt und/oder bearbeitet.

23. Verfahren nach einem der Ansprüche 17 bis 22, wobei die Datenverarbeitungseinheit (8) Diagnosedaten zur Steuerung der technischen Anlage (2) generiert.

24. Verfahren nach einem der Ansprüche 17 bis 23, wobei Auslastungszustände der gesamten technischen Anlage (2) oder Teilbereichen der technischen Anlage (2) erkannt werden.

25. Verfahren nach einem der Ansprüche 17 bis 24, wobei das Schreib-Lesegerät (5,5A,5B) Zustandsdaten und/oder Diagnosedaten der Datenverarbeitungseinheit (8) auf dem Datenspeicher (6) mindestens eines Objektes (3) speichert.
